# DEMANDE DE BREVET EUROPEEN

(11) **EP 0 918 266 A1**
(43) Date de publication de la demande: **26.05.1999**
(21) Numéro de dépôt: 98811099.5
(22) Date de dépôt: 03.11.1998
(51) Int. Cl.: G05B 19/042, G05B 19/425, E06B 9/74

(54) **Dispositif de commande d'un moyen de protection solaire motorisé**

(30) Priorité: 21.11.1997 FR 9714640
(71) Demandeur: SOMFY, F-74300 Cluses (FR)
(72) Inventeur: Grehant, Bernard Jean-Pierre, 74300 Nancy sur Cluses (FR); Jacquel, Dominique, 74300 Cluses (FR)
(74) Mandataire: Meylan, Robert Maurice

(57) **Abrégé**

Le dispositif est destiné à déplacer le moyen de protection solaire d'une première position, parmi au moins deux positions déterminées, vers une seconde position suite à une variation de l'ensoleillement. Il comprend une intelligence (6) décomposant le déplacement de la première à la seconde position en au moins deux étapes séparées par un intervalle de temps (T1). Une commande (STOP) actionnée par un utilisateur pendant ledit intervalle (T1) déclenche l'étape suivante et réduit cet intervalle d'une fraction. L'actionnement de la commande après l'intervalle (T1) et pendant le déroulement de l'étape suivante augmente l'intervalle (T1) d'une fraction.

Le dispositif de commande est ainsi capable de s'adapter au comportement de l'utilisateur.

## Description

La présente invention concerne un dispositif de commande d'un moyen de protection solaire mobile motorisé, assurant le déplacement du moyen de protection solaire d'une première position, parmi au moins deux positions déterminées, vers une seconde position suite à une variation de l'ensoleillement.

On connaît des dispositifs de positionnement d'un moyen de protection solaire en fonction de l'ensoleillement. Le dispositif décrit dans le document DE 30 39 644 modifie l'orientation des lames d'un store vénitien en fonction de la hauteur du soleil au dessus de l'horizon. Du document WO 92/00557, on connaît un dispositif assurant automatiquement le positionnement d'un store en fonction de la luminosité et de la température.

Afin d'éviter des mouvements intempestifs des moyens de protection solaire en raison de brèves variations de l'intensité de l'ensoleillement, variations dues, par exemple, à des passages nuageux, les dispositifs de commande automatique sont équipés de moyens de temporisation de telle sorte que de telles variations de l'ensoleillement restent sans effet sur le moyen de protection solaire. Pour l'utilisateur, le dispositif de commande réagit donc avec un certain retard. Selon l'utilisateur, ce retard peut être considéré soit comme excessif, soit comme insuffisant, l'utilisateur considérant, dans ce second cas, que le déplacement du moyen de protection solaire est encore intempestif. Le dispositif de commande ne parviendra donc pas à satisfaire tous les utilisateurs.

La présente invention a principalement pour but de créer un dispositif de commande capable de s'adapter à l'utilisateur, plus particulièrement à son comportement.

A cet effet, le dispositif de commande selon l'invention est caractérisé en ce qu'il comprend une intelligence décomposant le déplacement de la première à la seconde position en au moins deux étapes séparées par un intervalle de temps et capables de modifier d'une fraction cet intervalle, et un moyen dont l'actionnement pendant ledit intervalle déclenche l'étape suivante et réduit ledit intervalle d'une fraction et dont l'actionnement après ledit intervalle et pendant le déroulement de l'étape suivante, augmente ledit intervalle d'une fraction.

Ledit moyen peut être constitué, par exemple, de la touche d'arrêt "stop" d'un boîtier de commande manuelle du moyen de protection solaire.

Ce moyen peut être également constitué de l'ensemble des touches du boîtier de commande manuelle, un ordre de commande de montée ou de descente donné pendant ledit intervalle ayant pour effet de réduire l'intervalle, tandis que l'actionnement de la touche d'arrêt après ledit intervalle et pendant le déroulement de l'étape suivante ayant pour effet d'augmenter l'intervalle. Un tel mode d'exécution correspond à l'attitude généralement adoptée par l'utilisateur qui voudra positionner manuellement un volet roulant ou un store vénitien si l'automatisme réagit trop lentement.

Selon un mode d'exécution selon l'invention, l'intelligence est agencée, respectivement programmée, de telle sorte que le déplacement en au moins deux étapes est commandé uniquement lorsque la variation de l'intensité de l'ensoleillement se produit en sens inverse de la variation monotone due à la seule course du soleil. Dans le cas d'une modification de l'ensoleillement due à la seule course du soleil, il n'est en effet généralement pas nécessaire de modifier la vitesse d'adaptation, par paliers, de la position du moyen de protection solaire. Par contre, lors d'une modification de l'ensoleillement en sens inverse, c'est-à-dire provoquée soit par le passage d'un nuage, soit par l'apparition d'une éclaircie dans un ciel nuageux, l'utilisateur sera sensible au changement de position du moyen de protection solaire.

Dans un mode d'exécution préféré de l'invention, dans lequel l'intelligence comprend une mémoire dans laquelle est enregistrée une fonction de positionnement par paliers du moyen de protection solaire en fonction de l'intensité de l'ensoleillement et comprenant des moyens de commande volontaire essentiellement prioritaires de positionnement du moyen de protection solaire, l'intelligence est capable de modifier par paliers la fonction de positionnement enregistrée en réponse à un ordre de positionnement introduit manuellement. L'intelligence ne répondra toutefois à un tel ordre que si cet ordre est donné hors dudit intervalle. Ceci permet à l'utilisateur de modifier à son gré la fonction de positionnement. Les moyens de commande volontaire seront en général les touches de commande de montée et de descente du moyen de protection solaire.

Selon un mode d'exécution de l'intelligence du dispositif de commande, cette intelligence comprend un interpréteur de commande pour l'alimentation du moteur, cet interpréteur de commande assurant la gestion des positions du moyen de protection solaire dudit intervalle et exécutant les ordres de positionnement manuel, un interpréteur de course ayant pour mission d'apprendre la course de l'actionneur de manière répétitive à chaque cycle de fonctionnement montée-descente et délivrant à l'interpréteur de commande les positions minimale maximale du moyen de protection solaire, un estimateur de position chargé de calculer la position supposée du moyen de protection solaire en fonction des différentes sollicitations de mouvements fournis par l'interpréteur de commande au moteur, entre les positions minimale et maximale, et de communiquer à l'interpréteur de commande les différents niveaux de positions estimés de la fonction de positionnement, au moins un bloc de décisions auquel est associé un capteur d'ensoleillement, ce bloc de décision comportant autant de positions de sorties qu'il est prévu de positions dans la fonction de positionnement, lesdites sorties étant reliées à l'interpréteur de commande, et un bloc d'apprentissage associé au bloc de décision, ce bloc d'apprentissage étant chargé de modifier progressivement la fonction de positionnement chaque fois que l'utilisateur intervient manuellement.

Le dispositif peut en outre être équipé éventuellement de plusieurs blocs de décision et d'un sélecteur de bloc de décisions, ainsi que de moyens horodateurs pour l'introduction de la date et l'heure dans le bloc de décision, ces derniers étant dans ce cas agencés de manière à modifier la fonction de positionnement en fonction de l'ensoleillement de la date et de l'heure, ces variables étant découpées en tranches déterminant une suite de niveaux discrets.

Le dessin annexé illustre, à titre d'exemple, un mode d'exécution du dispositif selon l'invention.

La figure 1 est un schéma-bloc fonctionnel du dispositif de commande comprenant l'option apprentissage.

La figure 2 représente le diagramme d'un exemple d'évolution de la position du moyen de protection solaire en fonction du temps.

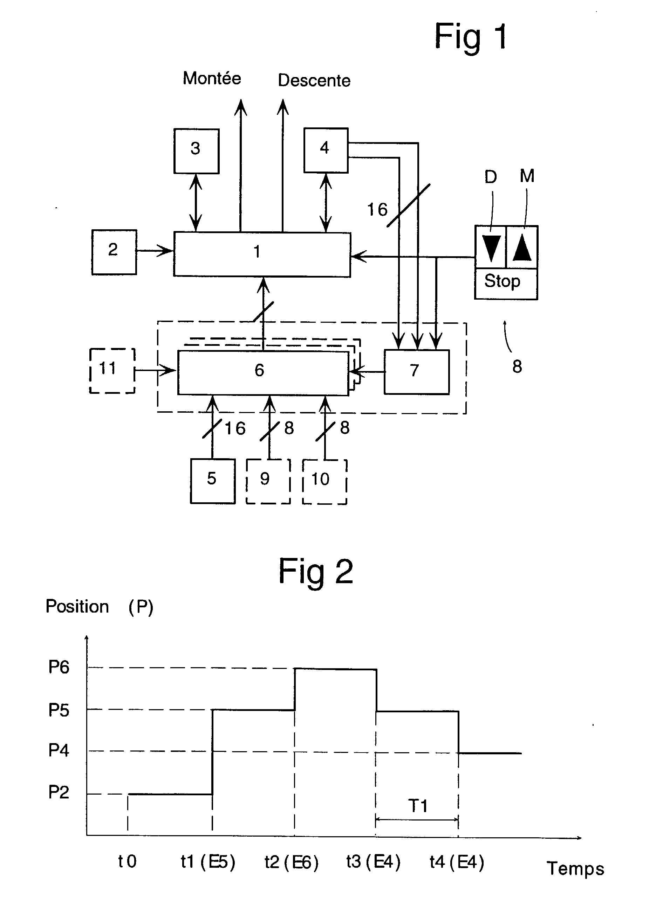

Le dispositif de commande comprend, selon la figure 1, un interpréteur de commande 1, un interpréteur de course 2, une temporisation 3, un estimateur de position 4, un détecteur d'ensoleillement 5, un bloc de décision 6, un bloc d'apprentissage 7 et un boîtier de commande manuelle 8 comprenant une touche de montée M, une touche de descente D et une touche d'arrêt STOP. En option, le dispositif de commande peut également comprendre un dispositif horodateur 9, 10, donnant respectivement la date et l'heure.

Le dispositif de commande pourrait être équipé de plusieurs blocs de décision 6. Dans ce cas, il sera prévu un sélecteur de bloc 11.

L'interpréteur de commande 1 a pour fonction principale de transformer une nouvelle position P donnée par le bloc d'apprentissage 7, constitué, par exemple, d'un réseau de neurones ou d'une unité logique de traitement ou d'une unité de logique floue, en un ordre directement exécutable par le moteur entraînant le moyen de protection solaire. En fonction de la position actuelle estimée, l'interpréteur de commande 1 alimente le moteur dans le sens de fonctionnement voulu et pendant un temps déterminé, afin d'atteindre la nouvelle position P.

L'interpréteur de commande 1 exécute également l'ordre de positionnement manuel donné par l'utilisateur au moyen des touches montée, descente et stop.

L'interpréteur de commande 1 introduit et gère la temporisation T1 dite temporisation de réaction du système, destinée à éviter de trop fréquents changements de positionnement du moyen de protection solaire.

L'interpréteur de commande 1 reçoit en outre de l'interpréteur de course 2 la position minimale P1 et la position maximale P16 (par exemple) du moyen de protection solaire utilisé, ces positions étant fournies comme des temps de fonctionnement du moteur, dans un sens et dans l'autre.

L'interpréteur de commande 1 informe enfin l'estimateur de position 4 de la quantité de mouvement qu'il donne à chacune de ses actions. L'interpréteur de commande a donc également une fonction de gestion des positions du moyen de protection solaire.

L'interpréteur de course 2 a pour mission d'apprendre la course de l'actionneur du moyen de protection solaire. A la première mise sous tension, le dispositif de commande fait parcourir au moyen de protection solaire un cycle complet de fonctionnement (montée et descente) qui donne les deux temps respectifs correspondant à la course entre P1 et P16 de l'actionneur. Par la suite, chaque fois que le moyen de protection solaire arrivera en fin de course, il recalera sa course. P1 et P16 correspondent respectivement, pour un store ou un volet roulant, à la position complètement enroulée et à la position complètement déroulée.

L'estimateur de position 4 est chargé de calculer la position supposée du moyen de protection solaire en fonction des différentes sollicitations de mouvements fournies par l'interpréteur de commande 1 au moteur dans l'intervalle P1-P16. Il fournit donc seize niveaux de positions estimés au bloc d'apprentissage 7 et à l'interpréteur de commande 1.

Le bloc ensoleillement 5 est constitué d'un capteur de soleil et d'un module électronique de mesure. Il détermine les seize niveaux d'ensoleillement El à E16 correspondant aux positions P1 à P16.

Le bloc d'apprentissage 7 contient un algorithme de rétro-propagation activé lors de chaque intervention de l'utilisateur au moyen du boîtier de commande 8. Cet algorithme permet la modification de l'intelligence du bloc de décision 6 par comparaison des sorties du bloc estimateur de position 4 avec la position choisie par l'utilisateur.

Le bloc de décision 6 comprend une intelligence comprenant seize positions de sorties correspondant essentiellement à une relation non linéaire de la position de sorties P en fonction de l'ensoleillement E et le cas échéant en fonction de la date et de l'heure.

Il est possible de prévoir plusieurs blocs de décision sélectionnables au moyen du sélecteur de bloc 11. Ces blocs de décision auront une intelligence différente correspondant à plusieurs humeurs possibles de l'utilisateur.

Le bloc de décision contient donc initialement la fonction P = f (E). Cette fonction est la même quelles que soient la date et l'heure, car on ne connaît pas au départ l'influence de la date et de l'heure sur les positions. La fonction P = f (E) peut présenter une hystérésis sur P correspondant à plus ou moins un niveau d'ensoleillement.

On décrira maintenant le fonctionnement du dispositif.

### L'initialisation :

Lors de la première mise sous tension, le moyen de protection solaire détermine tout d'abord automatiquement la course de son actionneur entre les deux positions extrêmes d'ouverture et de fermeture, c'est-à-dire entre les positions P1 et P16.

Le moyen de protection solaire exécute ensuite un ordre de positionnement conformément à la loi enregistrée P = f (E). En général, le moyen de protection solaire sera positionné d'autant plus bas que le niveau d'ensoleillement mesuré est important.

### Apprentissage :

La fonction P = f (E) est modifiée progressivement, en fonction des différents niveaux d'ensoleillement E, de la date et de l'heure, chaque fois que l'utilisateur intervient manuellement au moyen du boîtier de commande 8, la commande manuelle étant toujours prioritaire. Chaque positionnement commandée manuellement est enregistré en tant que nouvelle valeur Pn parmi les seize valeurs P1 à P16. L'utilisateur peut ainsi établir et modifier à volonté la fonction P = f (E) qui lui convient.

Si le dispositif comprend l'option date et heure, la fonction devient P = f (E, D, H).

Compte tenu de la nécessité de découper en tranches les heures, les dates et les zones de confort lumineux acceptables pour l'utilisateur, la fonction de position (P) = f (E) ou la fonction P = f (E, D, H) se présente toujours sous la forme d'une fonction en escalier.

Afin d'éviter des corrections de position intempestive lors de brèves variations de l'ensoleillement, le niveau d'ensoleillement mesuré doit demeurer stable un minimum de temps avant d'être pris en compte par le dispositif et en particulier par le bloc de décision. A cet effet, les données d'ensoleillement sont filtrées et temporisées dans le détecteur d'ensoleillement 5.

Supposons par exemple que le dispositif détecte une variation d'ensoleillement ΔE donnant E5, correspondant au passage d'une position actuelle P2 à une position nouvelle P5, il donne immédiatement l'ordre d'atteindre la position P5 (figure 2). Le sens de cette variation d'ensoleillement ΔE est mémorisé.

Lorsque le dispositif détecte une nouvelle variation d'ensoleillement ΔE, dans le même sens que la variation précédente, donnant E6, le dispositif donne immédiatement l'ordre d'atteindre la position correspondante P6 et ainsi de suite.

Si par contre la variation ΔE est de sens contraire à la variation précédente et donne, par exemple, la valeur d'ensoleillement E4 correspondant à une position P4, alors le dispositif donne l'ordre d'atteindre momentanément une position intermédiaire entre P6 et P4, soit P5 ou, s'il n'y a pas de position intermédiaire à mi-chemin entre ces deux positions, la position médiane la plus proche de la position finale à atteindre, pendant un intervalle de temps T1. A la fin de l'intervalle T1 et si les conditions sont restées stables, le dispositif donne l'ordre d'atteindre la position P4.

Si, durant l'intervalle T1, l'utilisateur donne un ordre de positionnement au moyen du boîtier de commande 8, l'interpréteur de commande 1 qui reçoit directement cet ordre, affecte une valeur réduite à l'intervalle T1. La réduction est par exemple égale à la moitié de l'écart mesuré entre le temps de réaction de l'utilisateur et T1.

Il se peut toutefois que l'utilisateur estime que le dispositif réagit trop rapidement, c'est-à-dire que l'intervalle T1 est trop court. Dans ce cas il aura la possibilité d'allonger l'intervalle, dans le cas particulier de doubler sa valeur T1, en appuyant sur une touche dédiée. On utilisera, de préférence, la touche STOP. L'effet ne sera obtenu cependant que si la touche STOP est actionnée avant que le moyen de protection solaire ait atteint sa nouvelle position.

En dehors de l'intervalle de temps T1, tout ordre de positionnement donné manuellement au moyen du boîtier de commande 8 serait considéré par le dispositif de commande comme une nouvelle valeur de position Pn de la fonction P = f (E).

Pour allonger l'intervalle T1, il serait possible de prévoir une touche spéciale au boîtier de commande.

Dans une exécution simplifiée, il est possible de renoncer à la fonction apprentissage et par conséquent au bloc d'apprentissage 7.

## Revendications

1. Dispositif de commande d'un moyen de protection solaire mobile motorisé, assurant le déplacement du moyen de protection solaire d'une première position, parmi au moins deux positions déterminées, vers une seconde position suite à une variation de l'ensoleillement, caractérisé en ce qu'il comprend une intelligence (6) décomposant le déplacement de la première à la seconde position en au moins deux étapes séparées par un intervalle de temps (T1) et capable de modifier d'une fraction cet intervalle (T1), et un moyen (STOP) dont l'actionnement pendant ledit intervalle (T1) déclenche l'étape suivante et réduit ledit intervalle d'une fraction et dont l'actionnement après ledit intervalle et pendant le déroulement de l'étape suivante, augmente ledit intervalle d'une fraction.

2. Dispositif selon la revendication 1, caractérisé en ce que l'intelligence est agencée, respectivement programmée, de telle sorte que le déplacement en au moins deux étapes est commandé uniquement lorsque la variation de l'intensité de l'ensoleillement se produit en sens inverse de la variation monotone due à la seule course du soleil.

3. Dispositif selon la revendication 1 ou 2, dont l'intelligence comprend une mémoire dans laquelle est enregistrée une fonction de positionnement (P=f(E)) par paliers du moyen de protection solaire en fonction de l'intensité de l'ensoleillement et comprenant des moyens de commande volontaire (8) essentiellement prioritaires de positionnement du moyen de protection solaire, caractérisé en ce que l'intelligence est capable de modifier par paliers la fonction de positionnement enregistrée en réponse à un ordre de positionnement introduit manuellement, l'intelligence ne répondant toutefois à un tel ordre que si cet ordre est donné hors dudit intervalle (T1).

4. Dispositif selon la revendication 3, caractérisé en ce que les moyens de commande volontaire sont des touches de commande de montée et de descente du moyen de protection solaire.

5. Dispositif selon la revendication 3 ou 4, caractérisé en ce que l'intelligence comprend un interpréteur de commande (1) pour l'alimentation du moteur, cet interpréteur de commande assurant la gestion des positions du moyen de protection solaire et dudit intervalle (T1) et exécutant les ordres de positionnement manuel, un interpréteur de course (2) ayant pour mission d'apprendre la course de l'actionneur de manière répétitive à chaque cycle de fonctionnement montée-descente et délivrant à l'interpréteur de commande les positions minimale et maximale du moyen de protection solaire, un estimateur de position (4) chargé de calculer la position supposée du moyen de protection solaire en fonction des différentes sollicitations de mouvements fournies par l'interpréteur de commande au moteur, entre les positions minimale (P1) et maximale (P16), et de communiquer à l'interpréteur de commande les différents niveaux de positions estimés de la fonction de positionnement, au moins un bloc de décision (6) auquel est associé un capteur d'ensoleillement (5), ce bloc de décision comportant autant de positions de sortie qu'il est prévu de positions dans la fonction de positionnement, lesdites sorties étant reliées à l'interpréteur de commande et un bloc d'apprentissage (7) associé au bloc de décision, ce bloc d'apprentissage étant chargé de modifier progressivement la fonction de positionnement chaque fois que l'utilisateur intervient manuellement.

6. Dispositif selon la revendication 5, caractérisé en ce qu'il comprend plusieurs blocs de décision et un sélecteur de bloc de décision (1).

7. Dispositif selon la revendication 5 ou 6, caractérisé en ce qu'il comprend des moyens horodateurs (9, 10) pour l'introduction de la date et de l'heure dans le bloc de décision et en ce que le bloc de décision est agencé de manière à modifier la fonction de positionnement en fonction de l'ensoleillement de la date et de l'heure, ces variables étant découpées en tranches déterminant une suite de niveaux discrets.

8. Dispositif selon l'une des revendications 1 à 7, caractérisé en ce que le moyen, dont l'actionnement a pour effet de réduire ou d'augmenter ledit intervalle (T1), est une touche de commande d'arrêt (STOP) du moyen de protection solaire.
